# EUROPÄISCHE PATENTSCHRIFT

(11) **EP 3 390 554 B1**
(45) Veröffentlichungstag und Bekanntmachung des Hinweises auf die Patenterteilung: **23.06.2021**
(21) Anmeldenummer: 16820213.3
(22) Anmeldetag: 14.12.2016
(51) Int. Cl.: C09J 5/02, C09J 5/06, B05D 7/02

(54) **VERFAHREN ZUM BESCHICHTEN EINES KUNSTSTOFFBAUTEILS MIT EINEM SCHMELZKLEBSTOFF**
METHOD FOR COATING A PLASTIC COMPONENT WITH A HOT-MELT ADHESIVE
PROCÉDÉ POUR REVÊTIR UNE PIÈCE EN MATIÈRE PLASTIQUE AVEC UN ADHÉSIF FUSIBLE

(30) Priorität: 15.12.2015 DE 102015225327
(43) Veröffentlichungstag der Anmeldung: 24.10.2018
(73) Patentinhaber: Lisa Dräxlmaier GmbH, 84137 Vilsbiburg (DE)
(72) Erfinder: SCHEINFLUG, Michael, 85435 Erding (DE); SCHLERETH, Lothar, 84036 Landshut (DE); GELTINGER, Petra, 84144 Geisenhausen (DE); MÜHLHOFER, Heinrich, 84137 Vilsbiburg (DE); MAGUNIA, Robert, 84144 Geisenhausen (DE); PEISSINGER, Christian, 84036 Landshut (DE)
(86) Internationale Anmeldenummer: PCT/EP2016/081074
(87) Internationale Veröffentlichungsnummer: WO 2017/102888

(56) Entgegenhaltungen:
- EP-A1- 2 145 907
- EP-A2- 0 913 205

## Beschreibung

### Technisches Gebiet

Die vorliegende Erfindung betrifft ein Verfahren zum Beschichten eines Kunststoffbauteils, insbesondere eines Innenausstattungsteils für ein Fahrzeug mit einem Schmelzklebstoff.

### Stand der Technik

Innenausstattungsteile von Kraftfahrzeugen sind in der Regel mit Dekorschichten oder Haptikschichten ausgestattet, um diese ästhetisch und haptisch aufzuwerten. Diese Dekorschichten sind hierbei flächig mit dem Innenausstattungsteil mithilfe von Klebstoff verbunden. Die Verklebung der Dekorschicht erfolgt hierbei in der Regel durch Auftragen eines Dispersions- oder Schmelzklebstoffes auf das Innenausstattungsteil und einem anschließenden Anordnen der Dekorschicht auf der mit Kleber versehenen Seite des Innenausstattungsteils. Meist handelt es sich bei dem Innenausstattungsteil um Kunststoffbauteile, auf denen der Klebstoff nur schwer haftet. Die zu beklebende Oberfläche des Innenausstattungsteils muss daher vorbehandelt werden, um eine ausreichende Haftung des Klebstoffes auf dem Innenausstattungsteil sicherzustellen.

Eine solche Vorbehandlung kann beispielsweise durch ein Beflammen der entsprechenden Oberfläche erfolgen. Da das Innenausstattungsteils durch die einwirkende Beflammung nicht beschädigt werden darf, kann das Innenausstattungsteil nur sehr kurz beflammt werden. Dies hat zur Folge, dass das Innenausstattungsteil in der Regel mehrmals hintereinander beflammt werden muss, um die gewünschte Haftung eines Klebstoffes auf dem Innenausstattungsteil sicher zu stellen. Ein mehrmaliges Beflammen steigert jedoch die Prozesszeit deutlich

In der EP 2 145 907 A1 wird ein amorphes Polyurethanpolymer und dessen Verwendung in feuchtigkeitshärtenden Heißschmelzklebstoffen offenbart. Das Polyurethanpolymer soll sich durch ein wesentlich geringeres Fließen des applizierten Klebstoffs auszeichnen und sich insbesondere für das Verkleben von transparenten Substraten eignen.

Ein Kaschierverfahren, bei dem die Verbindepartner durch eine solche Vorbehandlung präpariert werden, ist beispielsweise in der DE 101 49 142 A1 beschrieben, in der neben einer einkomponentigen feuchtigkeitshärtenden Schmelzklebstoff-Zusammensetzung ein Verfahren zum Kaschieren einer Folie auf einen Formkörper offenbart wird. Die Folie und der Formkörper werden hierzu einer Oberflächenbehandlung, wie zum Beispiel Beflammung, Coronabehandlung oder einem Primerauftrag, unterzogen. Anschließend wird auf die Folie Schmelzklebstoff aufgetragen und die Folie mit dem Formkörper gefügt.

### Beschreibung der Erfindung

Es ist daher eine Aufgabe der vorliegenden Erfindung ein Verfahren bereitzustellen, bei dem die Beschichtung eines Kunststoffbauteils mit einem Schmelzklebstoff effizienter erfolgt, ohne dass sich dies nachteilig auf die Haftkraft des Kunststoffbauteils auswirkt.

Die erfindungsgemäße Aufgabe wird durch ein Verfahren mit den Merkmalen des Hauptanspruchs gelöst. Weitere vorteilhafte Ausgestaltungen lassen sich den Unteransprüchen, der Beschreibung sowie den Zeichnungen entnehmen.

Ein erfindungsgemäßes Verfahren zum Beschichten eines Kunststoffbauteils umfasst zumindest die Schritte: Beflammen einer Beschichtungsfläche, Auftragen eines feuchtigkeitshärtenden, bevorzugt wärmeaktivierbaren, Schmelzklebstoffes und Erhitzen des Schmelzklebstoffes nach dem Schritt des Auftragens mit Hilfe einer Sprüheinheit, wobei das Kunststoffbauteil im Bereich der Beschichtungsfläche zumindest einen ebenen Abschnitt und zumindest einen konturierten Abschnitt aufweist und die Sprüheinheit den Schmelzklebstoff im ebenen Abschnitt mit einem Flächensprühkopf und im konturierten Abschnitt mit einem Spinnsprühkopf aufträgt.

Der Schritt des Beflammens erfolgt durch eine Beflammungseinheit, die zur Oberflächenaktivierung auf die Beschichtungsfläche einwirkt. Die Beflammungseinheit kann hierbei die gesamte Beschichtungsfläche gleichzeitig beflammen. Die Beflammungseinheit kann jedoch ebenso lediglich einen Abschnitt der Beschichtungsfläche beflammen und die Beschichtungsfläche nach und nach in einem vorgegebenen Muster abfahren. Da sich ein Beflammen zur Oberflächenaktivierung besonders bei Kunststoffen eignet, besteht das Kunststoffbauteil zumindest teilweise aus Kunststoff oder weist zumindest anteilig eine Kunststoffmatrix auf. Durch das Beflammen finden im Kunststoff Oxidationsprozesse statt, die zu polaren, organischen funktionellen Gruppen führen. Dies führt zu einer Polarisation der Beschichtungsfläche und steigert die Oberflächenspannung auf der Beschichtungsfläche. Die Beschichtungsfläche kann somit deutlich besser von dem Schmelzklebstoff benetzt werden.

Das Auftragen desfeuchtigkeitshärtenden Schmelzklebstoffes kann ebenfalls gleichzeitig auf der gesamten Beschichtungsfläche erfolgen. Alternativ kann jedoch auch der Schmelzklebstoff nach und nach über ein bestimmtes Zeitintervall auf der Beschichtungsfläche aufgetragen werden. Der Schmelzklebstoff wird während des Schrittes des Auftragens mit einer Sprüheinheit auf die Beschichtungsfläche aufgetragen. Der Vorteil einer Sprüheinheit besteht insbesondere darin, dass der Klebstoff äußerst fein zerstäubt und somit besonders gleichmäßig über die Beschichtungsfläche verteilt werden kann. Die Sprüheinheit umfasst einen Flächensprühkopf und einen Spinnsprühkopf, die an einem Roboter angeordnet sein können, so dass die Sprühköpfe mithilfe des Roboters in geringem Abstand zum Kunststoffbauteil über die Beschichtungsfläche bewegt werden können. Es ist jedoch ebenso möglich, dass die Sprühköpfe starr fixiert sind und stattdessen das Kunststoffbauteil um die Sprühköpfe bewegt werden.

Da das Kunststoffbauteil sowohl ebene Abschnitte als auch konturierte Abschnitte aufweist, trägt die Sprüheinheit den Schmelzklebstoff in dem ebenen Abschnitt mit dem Flächensprühkopf und im konturierten Abschnitt mit dem Spinnsprühkopf oder Konturkantensprühkopf auf die Beschichtungsfläche auf. Dies begründet sich darin, dass mit einem Flächensprühkopf in ebenen Abschnitten eine homogene Benetzung mit dem Schmelzklebstoff auf einfache Weise realisiert werden kann und in kurzer Zeit eine große Fläche mit Schmelzklebstoff benetzt werden kann. Sind jedoch konturierte Abschnitte mit Schmelzklebstoff zu benetzen, sind Spinnsprühköpfe oder Konturkantensprühköpfe von Vorteil. Spinnsprühkopfe oder Konturkantensprühköpfe können zwar in einem vergleichbaren Zeitintervall eine deutlich kleinere Fläche benetzen als Flächensprühköpfe, doch ist ein vom Spinnsprühkopf bzw. Konturkantensprühkopf abgegebener Sprühstrahl deutlich präziser. Auf diese Weise kann das Kunststoffbauteil effizient benetzt werden, ohne dass Bereiche beispielsweise doppelt mit Klebstoff benetzt werden.

Unter "feuchtigkeitshärtendem Schmelzklebstoff" kann an dieser Stelle ein weitgehend lösungsmittelfreier Klebstoff, zum Beispiel mit Urethan-Gruppen, verstanden werden, der bei Raumtemperatur fest ist und nach der Applikation in Form seiner Schmelze nicht nur durch Abkühlen physikalisch bindet, sondern auch durch chemische Reaktion von noch vorhandenen Isocyanatgruppen mit Feuchtigkeit. Erst nach dieser chemischen Aushärtung unter Molekülvergrößerung erhält der Klebstoff seine endgültigen Eigenschaften.

Erfindungsgemäß wird zusätzlich vor dem Schritt des Beflammens die Beschichtungsfläche mithilfe einer Heizeinheit zumindest auf einen Temperaturschwellwert erwärmt. Die Heizeinheit ist bevorzugt separat zur Beflammeinheit ausgeführt. Dies kann so verstanden werden, dass die Beflammeinheit und die Heizeinheit nicht als eine Vorrichtung sondern als zwei Vorrichtungen gesehen werden können, die sich in ihrer Wirkweise unterscheiden können. Es hat sich überraschenderweise gezeigt, dass ein Erwärmen der Beschichtungsfläche vor dem Beflammen auf zumindest den Temperaturschwellwert, die Oberflächenaktivierung während des Schrittes des Beflammens deutlich verbessert. Es konnte beobachtet werden, dass bei gleichbleibender Beflammung des Kunststoffbauteils die Haftkraft des Schmelzklebstoffes auf der Beschichtungsoberfläche um 10 bis 20% verbessert ist im Vergleich zu Kunststoffbauteilen, die nicht vor dem Beflammen erwärmt wurden.

Unter einem Erwärmen auf zumindest den Temperaturschwellwert kann an dieser Stelle verstanden werden, dass das Kunststoffbauteil zumindest auf diesen Temperaturschwellwert oder über den Temperaturschwellwert hinaus erwärmt wird. Weiterhin kann unter dem Temperaturschwellwert ein Temperaturwert verstanden werden.

Obwohl mit dem Erwärmen ein zusätzlicher Prozessschritt notwendig ist, gestaltet sich das erfindungsgemäße Beschichtungsverfahren deutlich effizienter als Beschichtungsverfahren, die auf eine Erwärmung vor dem Beflammen verzichten. Dies begründet sich zum einen darin, dass eine zur Oberflächenaktivierung notwendige Beflammungszeit der Beschichtungsfläche reduziert werden kann, ohne dass sich dies nachteilig auf die Haftkraft der Beschichtungsfläche ausübt. Weiterhin kann die Erwärmung der Beschichtungsfläche deutlich schneller erfolgen als eine Oberflächenaktivierung der Beschichtungsfläche mittels Beflammungseinheit, so dass in Summe die Oberflächenaktivierung bei einer Kombination von Erwärmen und Beflammen schneller erfolgen kann als bei einer reinen Beflammung.

Die Verbesserung der Oberflächenaktivierung durch die Erwärmung ist darauf zurückzuführen, dass Atome innerhalb der Kunststoffmatrix eine höhere Beweglichkeit durch die Erwärmung aufweisen. Durch die Erwärmung liegen somit mehr Atome oberhalb einer Aktivierungstemperatur vor, die notwendig ist, um bei einem Zusammenstoß mit einem Reaktionspartner zu reagieren.

Es hat sich gezeigt, dass es von besonderem Vorteil ist, wenn der Temperaturschwellwert einem Temperaturwert von 40 bis 120 Grad Celsius, bevorzugt 45 bis 60 Grad Celsius, entspricht. In diesem Temperaturbereich wird das Kunststoffbauteil und somit die Beschichtungsfläche ausreichend stark erwärmt, um die Oberflächenaktivierung durch die Beflammungseinheit zu begünstigen. Gleichzeitig ist jedoch sichergestellt, dass das Kunststoffbauteil selbst durch die eingebrachte Wärme nicht beschädigt oder in seiner chemischen Zusammensetzung verändert wird. Gleichzeitig ist auf diese Weise sichergestellt, dass kein zusätzlicher Kühlprozess notwendig wird.

Es hat sich gezeigt, dass die Heizeinheit die Beschichtungsfläche besonders effizient mit Infrarotstrahlen erwärmen kann. Die Heizeinheit kann also einen Infrarotstrahler umfassen, welcher in geringem Abstand zur Beschichtungsfläche positioniert wird und unter Abgabe von Infrarotstrahlen die Beschichtungsfläche erwärmt. Es ist hierbei von besonderem Vorteil, wenn der Infrarotstrahler in seiner Fläche bzw. in der Fläche der abgegebenen Infrarotstrahlen größer ist als die Beschichtungsfläche, so dass das Kunststoffbauteil über die gesamte Beschichtungsfläche homogen mithilfe der Heizeinheit erwärmt werden kann.

Es ist von Vorteil, wenn die Beschichtungsfläche nach dem Schritt des Beflammens eine Oberflächenspannung von 40 bis 60 mN/m aufweist. Es hat sich gezeigt, dass die Beschichtungsfläche mit einer solchen Oberflächenspannung ausreichend Haftkraft aufweist, um eine ausreichend stabile Verbindung mit dem aufzubringenden Schmelzklebstoff einzugehen. Es ist hierbei besonders bevorzugt, dass die Oberflächenspannung über die Beschichtungsfläche zumindest im Bereich von 40 bis 60 mN/m bleibt und noch bevorzugter konstant bleibt.

Es hat sich gezeigt, dass es von Vorteil ist, wenn nach dem Schritt des Auftragens des Schmelzklebstoffes auf die Beschichtungsfläche der Schmelzklebstoff erhitzt wird, so dass eine Viskosität des Schmelzklebstoffes (4) unter einen Viskositätsschwellwert sinkt. Unter einem Viskositätsschwellwert kann in diesem Zusammenhang ein definierter Viskositätsgrad des Schmelzklebstoffes verstanden werden, bei dem der Schmelzklebstoff, ein angestrebtes Fließverhalten aufweist. In diesem Zusammenhang ist es bevorzugt, dass der Viskositätsschwellwert so gewählt ist, dass der Schmelzklebstoff bei Erreichen dieses Viskositätsschwellwertes ohne äußere Einwirkung auf der Beschichtungsfläche zumindest soweit fließt, dass sich dieser auf der Beschichtungsfläche in seiner Dicke und Verteilung zumindest teilweise homogenisiert.

Es sei an dieser Stelle darauf hingewiesen, dass während des Schrittes des Erhitzens noch kein Aktivieren des Klebstoffes stattfinden muss.

Es hat sich gezeigt, dass es von Vorteil ist, wenn der Schmelzklebstoff während des Schrittes des Erhitzens auf eine Temperatur von 40 bis 120°C, bevorzugt 50 bis 70°C erwärmt wird. Innerhalb dieses Temperaturbereichs ist für die meisten am Markt gängigen feuchtigkeitshärtenden Schmelzklebstoffe sichergestellt, dass die Viskosität des Klebstoffs so weit gesenkt wird, dass der gewünschte Viskositätsschwellwert erreicht wird..

Es ist hierbei von besonderem Vorteil, wenn die gesamte Beschichtungsfläche gleichzeitig und vor allem homogen erhitzt wird. Dies hat den Vorteil, dass die Viskosität des Schmelzklebstoffes über die gesamte Beschichtungsfläche gleichmäßig reduziert wird und somit ein ideales Fließverhalten des Schmelzklebstoffes sichergestellt ist.

Es ist hierbei von besonderem Vorteil, wenn der Schritt des Erhitzens mithilfe der Heizeinheit erfolgt. Dies begründet sich darin, dass keine zusätzliche Heizquelle bereitstehen muss, um den Schritt des Erhitzens zu ermöglichen.

Um die Haftung des Schmelzklebstoffes nach dem Beschichten zusätzlich zu verbessern, kann das erfindungsgemäße Verfahren einen Schritt des Bedampfens der Beschichtungsfläche mit einem Heißdampf, bevorzugt Wasserdampf, umfassen. Der Schritt des Bedampfens erfolgt bevorzugt nach dem Schritt des Erhitzens. Es ist in diesem Zusammenhang von Vorteil, wenn der Schmelzklebstoff Isocyanatgruppen aufweist und insbesondere aus der Gruppe der thermisch reaktiven oder schmelzbaren Polyurethanklebstoffe ausgewählt ist.

Es hat sich hierbei gezeigt, dass die Haftkraft des Schmelzklebstoffes besonders gesteigert werden kann, wenn die Beschichtungsfläche in einer Bedampfungszeit von 5 bis 50 Sekunden, bevorzugt 15 bis 35 Sekunden, dem Heißdampf ausgesetzt ist.

Die Beschichtungsfläche muss hierbei nicht über die Bedampfungszeit einer konstanten Dampfintensität des Heißdampfes ausgesetzt sein. Es ist vielmehr ebenso möglich, dass die Dampfintensität über die Bedampfungszeit veränderlich ist. Beispielsweise kann die Dampfintensität zu Beginn der Bedampfungszeit stetig auf einen Maximalwert ansteigen. Nach Erreichen des Maximalwerts kann dann beispielsweise die Dampfintensität konstant bleiben und gegen Ende der Bedampfungszeit wieder abnehmen. Die Dampfintensität kann jedoch ebenso mehrmals über die Bedampfungszeit ansteigen bzw. abfallen.

### Kurze Figurenbeschreibung

Darüber hinaus sind weitere Vorteile und Merkmale der vorliegenden Erfindung aus der folgenden Beschreibung bevorzugter Ausführungsformen ersichtlich. Die dort und oben beschriebenen Merkmale können alleinstehend oder in Kombination umgesetzt werden, sofern sich die Merkmale nicht widersprechen. Die folgende Beschreibung bevorzugter Ausführungsformen erfolgt dabei unter Bezugnahme auf die begleitenden Zeichnungen. Dabei zeigen:

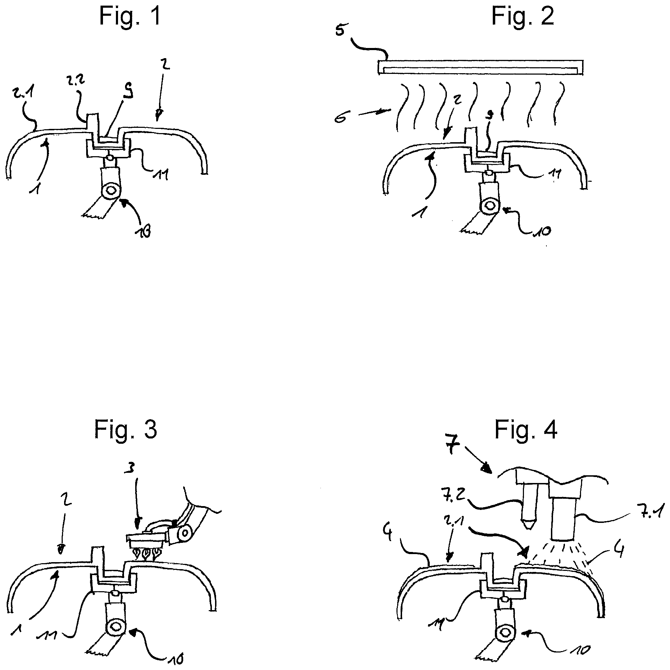

Figuren 1 bis 7 ein Ausführungsbeispiel des erfindungsgemäßen Verfahrens in den jeweiligen Verfahrensschritten.

Figur 1 zeigt ein erfindungsgemäßes Kunststoffbauteil 1, das im vorliegenden Ausführungsbeispiel ein Innenausstattungsteil eines Personenkraftwagens ausbildet und über einen Roboterarm 10, der einen Greifer 11 besitzt, fixiert wird. Das Kunststoffbauteil 1 weist weiterhin eine Beschichtungsfläche 2 auf, die dem Roboterarm 10 bzw. dem Greifer 11 abgewandt ist. Die Beschichtungsfläche 2 des Innenausstattungsteils 1 soll mit einem nicht gezeigten Dekor ausgestattet werden. Die Beschichtungsfläche 2 weist sowohl einen ebenen Abschnitt 2.1 als auch einen konturierten Abschnitt 2.2 auf. Innerhalb der Beschichtungsfläche 2; 2.1; 2.2 ist ein Bereich vorgesehen, welcher nicht mit einem Dekor ausgestattet werden soll. Um zu vermeiden, dass dieser Bereich im Zuge des erfindungsgemäßen Verfahrens beispielsweise beschädigt oder verschmutzt wird, ist dieser Bereich mit einer Maskierung 9 abgedeckt.

Nachdem das Kunststoffbauteil 1 vom Roboterarm 10 über den Greifer 11 aufgenommen wurde, wird das Kunststoffbauteil 1 mithilfe des Roboters 10 zu einer Heizeinheit 5 bewegt. Die Heizeinheit 5 ist im vorliegenden Ausführungsbeispiel als Infrarotheizstrahler ausgeführt. Wie in Fig. 2 dargestellt, richtet der Roboterarm 10 hierbei das Kunststoffbauteil 1 derart aus, dass es mit der Beschichtungsfläche 2 dem Infrarotstrahler 5 zugewandt ist. Der Infrarotstrahler 5 ist hierbei großflächig ausgeführt, so dass vom Infrarotstrahler 5 ausgegebene Infrarotstrahlen 6 die gesamte Beschichtungsfläche 2 erwärmen. Im vorliegenden Ausführungsbeispiel wird die Beschichtungsfläche 2 bzw. das Kunststoffbauteil 1 6 Sekunden dem Infrarotstrahler ausgesetzt. Innerhalb dieser 6 Sekunden erwärmt sich das Kunststoffbauteil 1 auf eine Temperatur von 50°C, was einem vorher definierten Temperaturschwellwert entspricht.

Nachdem das Kunststoffbauteil 1 mithilfe des Infrarotstrahlers 5 erwärmt wurde, wird es mithilfe des Roboterarms 10 zu einer Beflammungseinheit 3 transportiert. Die Beflammungseinheit 3 ist ebenfalls an einem beweglichen Arm befestigt und kann bei eingeschalteter Beflammung die Oberfläche in einem vorgegebenen Programm abfahren und somit die Beschichtungsfläche 2 gleichmäßig aktivieren. Ein solcher Beflammungsvorgang ist in Fig. 3 dargestellt. Um sicherzustellen, dass die Beschichtungsfläche 2 nicht durch die Flamme der Beflammungseinheit 3 beschädigt wird, bewegt sich die Beflammungseinheit 3 mit 600 mm/s über die Beschichtungsfläche 2.

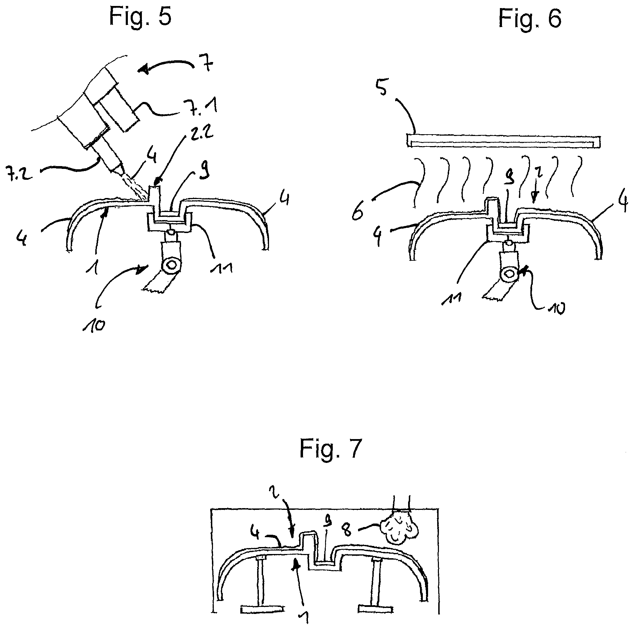

Nachdem die Beschichtungsfläche 2 mithilfe der Beflammungseinheit 3 aktiviert wurde, erfolgt ein Schritt des Auftragens eines feuchtigkeitshärtenden Schmelzklebstoffes 4. Der Auftrag erfolgt im vorliegenden Ausführungsbeispiel mithilfe einer Sprüheinheit 7 und ist in den Figuren 4 und 5 dargestellt. Da die Beschichtungsfläche 2 des Kunststoffbauteils 1 sowohl ebene Abschnitte 2.1 als auch konturierte Abschnitte 2.2 aufweist, besitzt die Sprüheinheit 7 sowohl einen Spinnsprühkopf 7.2 für konturierte Abschnitte 2.2 und einen Flächensprühkopf 7.1 für ebene Abschnitte 2.1. Im ersten Schritt werden die ebenen Abschnitte 2.1 mit dem Flächensprühkopf 7.1 abgefahren, wobei der Flächensprühkopf 7.1 den Schmelzklebstoff 4 fein auf den ebenen Abschnitten 2.1 verteilt.

Anschließend wird der Flächensprühkopf 7.1 zurückgefahren und der Spinnsprühkopf 7.2 wird zum Aufsprühen des Klebstoffes 4 in Position gebracht. Im vorliegenden Ausführungsbeispiel wird hierbei durch den Roboterarm 10 das Kunststoffbauteil 1 um die jeweiligen Sprühköpfe 7.1 und 7.2 in einem definierten Programm bewegt. Beide Sprühköpfe 7.1 und 7.2 sind also starr angeordnet.

Sobald die Beschichtungsfläche 2 ausreichend mit Schmelzklebstoff 4 beschichtet wurde, wird das Kunststoffbauteil vom Roboterarm 10 zurück zur Heizeinheit 5 befördert. Das Kunststoffbauteil 1 und insbesondere die Beschichtungsfläche 2 mit dem darauf befindlichen Schmelzklebstoff 4 werden mithilfe der Heizeinheit 5 auf eine Temperatur von 60°C erhitzt, um die Viskosität des Schmelzklebstoffs (4) unter einen vorher definierten Viskositätsschwellwert zu senken, was dazu führt, dass sich die Fließfähigkeit des Schmelzklebstoffes (4) verbessert und sich der Schmelzklebstoff (4) auf der Beschichtungsfläche (2) homogenisiert. Hierzu wird das Kunststoffbauteil 1 den Infrarotstrahlen 6 des Infrarotstrahlers 5 7 Sekunden ausgesetzt. Dieses Erhitzen ist in Figur 6 dargestellt.

Figur 7 zeigt im letzten Verfahrensschritt ein Bedampfen des Kunststoffbauteils 1 mit Heißdampf 8. Der Heißdampf 8 besteht im vorliegenden Ausführungsbeispiel aus Wasserdampf und wird in einer Bedampfungskammer ausgebracht, in der auch das Kunststoffbauteil 1 angeordnet ist. Das Kunststoffbauteil 1 ist auf Stützen angeordnet, um sicherzustellen, dass der Heißdampf 8 das Kunststoffbauteil 1 vollständig umgeben kann. Durch den Bedampfungsprozess wird der feuchtigkeitshärtende Schmelzklebstoff (4) aktiviert.

Die mit Bezug auf die Figuren gemachten Erläuterungen sind rein illustrativ und nicht beschränkend zu verstehen.

### BEZUGSZEICHENLISTE

- 1.: Kunststoffbauteil
- 2.: Beschichtungsfläche
- 2.1: Ebener Abschnitt
- 2.2: Konturierter Abschnitt
- 3.: Beflammungseinheit
- 4.: Schmelzklebstoff
- 5.: Heizeinheit
- 6.: Infrarotstrahlen
- 7: Sprüheinheit
- 7.1: Flächensprühkopf
- 7.2: Spinnsprühkopf
- 8.: Heißdampf
- 9.: Maskierung
- 10.: Roboterarm
- 11.: Greifer

## Patentansprüche

1. Verfahren zum Beschichten eines Kunststoffbauteiles (1) umfassend die Schritte:
- Erwärmen einer Beschichtungsfläche (2; 2.1; 2.2) mit Hilfe einer Heizeinheit (5) zumindest auf einen Temperaturschwellwert;
- Beflammen der Beschichtungsfläche (2; 2.1; 2.2) des Kunststoffbauteiles (1) mit Hilfe einer Beflammungseinheit (3) zur Oberflächenaktivierung der Beschichtungsfläche (2), wobei das Erwärmen vor dem Beflammen erfolgt;
- Auftragen eines feuchtigkeitshärtenden Schmelzklebstoffes (4) auf die Beschichtungsfläche (2; 2.1; 2.2) mit Hilfe einer Sprüheinheit (7; 7.1; 7.2) ;
**dadurch gekennzeichnet, dass**
das Kunststoffbauteil (1) im Bereich der Beschichtungsfläche (2; 2.1; 2.2) zumindest einen ebenen Abschnitt (2.1) und zumindest einen konturierten Abschnitt (2.2) aufweist und die Sprüheinheit (7; 7.1; 7.2) den Schmelzklebstoff (4) im ebenen Abschnitt (2.1) mit einem Flächensprühkopf (7.1) und im konturierten Abschnitt (2.2) mit einem Spinnsprühkopf (7.2) aufträgt.

2. Verfahren nach dem vorhergehenden Anspruch, wobei der Temperaturschwellwert einem Temperaturwert von 40 bis 120 Grad Celsius, bevorzugt 45 bis 60 Grad Celsius, entspricht.

3. Verfahren nach einem der vorhergehenden Ansprüche, wobei die Heizeinheit (5) mit Hilfe von Infrarotstrahlen (6) die Beschichtungsfläche (2; 2.1; 2.2) erwärmt.

4. Verfahren nach einem der vorhergehenden Ansprüche, wobei die Beschichtungsfläche (2; 2.1; 2.2) nach dem Schritt des Beflammens eine Oberflächenspannung von 40 bis 60 mN/m aufweist.

5. Verfahren nach einem der vorhergehenden Ansprüche, wobei nach dem Schritt des Auftragens ein Schritt des Erhitzens des Schmelzklebstoffes (4) erfolgt, so dass eine Viskosität des Schmelzklebstoffes (4) unter einen Viskositätsschwellwert sinkt.

6. Verfahren nach einem der vorhergehenden Ansprüche, wobei der Schmelzklebstoff (4) während des Schrittes des Erhitzens auf eine Temperatur von 40 bis 120 Grad Celsius, bevorzugt 50 bis 70 Grad Celsius, erwärmt wird.

7. Verfahren nach einem der vorhergehenden Ansprüche, wobei der Schritt des Erhitzens des Schmelzklebstoffes (4) mit Hilfe der Heizeinheit (5) erfolgt.

8. Verfahren nach einem der vorhergehenden Ansprüche, wobei nach dem Schritt des Erhitzens des Schmelzklebstoffes ein Schritt des Bedampfens der Beschichtungsfläche (2; 2.1; 2.2) mit einem Heißdampf (8), bevorzugt Wasserdampf, erfolgt.

9. Verfahren nach Anspruch 8, wobei die Beschichtungsfläche (2; 2.1; 2.2) in einer Bedampfungszeit von 5 bis 50 Sekunden, bevorzugt von 15 bis 35 Sekunden, dem Heißdampf (8) ausgesetzt ist.

10. Verfahren nach Anspruch 9, wobei die Beschichtungsfläche (2; 2.1; 2.2) über die Bedampfungszeit einer sich verändernden, insbesondere abnehmenden, Dampfintensität des Heißdampfes (8) ausgesetzt ist.

## Claims

1. Process for the coating of a plastic component (1) comprising the following steps:
- heating of a coating area (2; 2.1; 2.2) with the aid of a heating unit (5) at least to a threshold temperature value;
- applying flame to the coating area (2; 2.1; 2.2) of the plastic component (1) with the aid of a flame-application unit (3) for the surface-activation of the coating area (2), where the heating takes place before the application of the flame;
- application of a moisture-curing hotmelt adhesive (4) to the coating area (2; 2.1; 2.2) with the aid of a spray unit (7; 7.1; 7.2);
**characterized in that**
in the region of the coating area (2; 2.1; 2.2) the plastic component (1) has at least one smooth section (2.1) and at least one shaped section (2.2), and the spray unit (7; 7.1; 7.2) applies the hotmelt adhesive (4) by using a wide-angle spray head (7.1) in the smooth section (2.1) and by using a spin spray head (7.2) in the shaped section (2.2).

2. Process according to the preceding claim, where the threshold temperature value is a temperature value of 40 to 120 degrees Celsius, preferably 45 to 60 degrees Celsius.

3. Process according to either of the preceding claims, where the heating unit (5) heats the coating area (2; 2.1; 2,2) with the aid of infrared radiation (6).

4. Process according to any of the preceding claims, where, after the step of flame application, the surface tension of the coating area (2; 2.1; 2,2) is 40 to 60 mN/m.

5. Process according to any of the preceding claims, where a step of heating of the hotmelt adhesive (4) takes place after the application step, and the viscosity of the hotmelt adhesive (4) thus falls below a threshold viscosity value.

6. Process according to any of the preceding claims, where, during the heating step, the hotmelt adhesive (4) is heated to a temperature of 40 to 120 degrees Celsius, preferably 50 to 70 degrees Celsius.

7. Process according to any of the preceding claims, where the step of heating of the hotmelt adhesive (4) takes place with the aid of the heating unit (5).

8. Process according to any of the preceding claims, where a step of vapour-treatment of the coating area (2; 2.1; 2,2) with a hot vapour (8), preferably water vapour, takes place after the step of heating of the hotmelt adhesive.

9. Process according to Claim 8, where the vapour-treatment time during which the coating area (2; 2.1; 2,2) has exposure to the hot vapour (8) is 5 to 50 seconds, preferably 15 to 35 seconds.

10. Process according to Claim 9, where, during the vapour-treatment time, the coating area (2; 2.1; 2,2) has exposure to a changing, in particular decreasing, vapour intensity of the hot vapour (8).

## Revendications

1. Procédé de revêtement d'un composant (1) en matière synthétique, le procédé comprenant les étapes suivantes :
- chauffer une surface de revêtement (2 ; 2.1 ; 2.2) à l'aide d'un élément chauffant (5) au moins à une valeur seuil de température ;
- flamber la surface de revêtement (2 ; 2.1 ; 2.2) du composant (1) en matière synthétique à l'aide d'une unité de flambage (3) pour l'activation en surface de la surface de revêtement (2), le chauffage étant effectué avant le flambage ;
- appliquer un adhésif thermofusible (4) durcissant à l'humidité sur la surface de revêtement (2 ; 2.1 ; 2.2) à l'aide d'une unité de pulvérisation (7 ; 7.1 ; 7.2) ;
**caractérisé en ce que**
le composant (1) en matière synthétique comporte dans la zone de la surface de revêtement (2 ; 2.1 ; 2.2) au moins une portion plane (2.1) et au moins une portion profilée (2.2) et l'unité de pulvérisation (7 ; 7.1 ; 7.2)) applique l'adhésif thermofusible (4) dans la portion plane (2.1) au moyen d'une tête de pulvérisation de surface (7.1) et dans la portion profilée (2.2) au moyen d'une tête de pulvérisation rotative (7.2).

2. Procédé selon la revendication précédente, la valeur de seuil de température correspondant à une valeur de température de 40 à 120 degrés Celsius, de préférence de 45 à 60 degrés Celsius.

3. Procédé selon l'une des revendications précédentes, l'unité de chauffage (5) chauffant la surface de revêtement (2 ; 2.1 ; 2.2) à l'aide de rayons infrarouges (6).

4. Procédé selon l'une des revendications précédentes, la surface de revêtement (2 ; 2,1 ; 2,2) présentant une tension superficielle de 40 à 60 mN/m après l'étape de flambage.

5. Procédé selon l'une des revendications précédentes, une étape de chauffage de l'adhésif thermofusible (4) étant effectuée après l'étape d'application de façon à abaisser la viscosité de l'adhésif thermofusible (4) au-dessous d'une valeur seuil de viscosité.

6. Procédé selon l'une des revendications précédentes, l'adhésif thermofusible (4) étant chauffé à une température de 40 à 120 degrés Celsius, de préférence de 50 à 70 degrés Celsius, pendant l'étape de chauffage.

7. Procédé selon l'une des revendications précédentes, l'étape de chauffage de l'adhésif thermofusible (4) étant effectuée à l'aide de l'unité de chauffage (5).

8. Procédé selon l'une des revendications précédentes, une étape de vaporisation de la surface de revêtement (2 ; 2,1 ; 2,2) avec de la vapeur surchauffée (8), de préférence de la vapeur d'eau, étant effectuée après l'étape de chauffage de l'adhésif thermofusible.

9. Procédé selon la revendication 8, la surface de revêtement (2 ; 2,1 ; 2,2) étant exposée à la vapeur surchauffée (8) pendant un temps de vaporisation de 5 à 50 secondes, de préférence de 15 à 35 secondes.

10. Procédé selon la revendication 9, la surface de revêtement (2 ; 2,1 ; 2,2) étant exposée à une intensité de vapeur variable, notamment décroissante, de la vapeur surchauffée (8) au-delà du temps de vaporisation.
